# EUROPEAN PATENT APPLICATION

(11) **EP 4 129 781 A1**
(43) Date of publication of application: **08.02.2023**
(21) Application number: 21775335.9
(22) Date of filing: 25.03.2021
(51) Int. Cl.: B60T 13/14, B60T 8/40, B60T 7/04

(54) **ELECTRONIC BRAKE SYSTEM**

(30) Priority: 25.03.2020 KR 20200036404
(71) Applicant: Mando Corporation, Pyeongtaek-si, Gyeonggi-do 17962 (KR)
(72) Inventor: KIM, Jinseok, Suwon-si Gyeonggi-do 16516 (KR)
(74) Representative: Pfenning, Meinig & Partner mbB
(86) International application number: PCT/KR2021/003733
(87) International publication number: WO 2021/194286

(57) **Abstract**

An electronic brake system is disclosed. An electronic brake system according to the present embodiment may comprise: a reservoir in which a pressurizing medium is stored; an integrated master cylinder comprising a master piston connected to a brake pedal, a master chamber having a volume varied by a displacement of the master piston, and a sealing member for sealing the master chamber; a liquid-pressure supply device for operating a hydraulic piston according to an electric signal that is output in response to a displacement of the brake pedal, thereby generating a liquid pressure; a hydraulic control unit provided between the liquid-pressure supply device and multiple wheel cylinders so as to control a flow of the pressurizing medium supplied to the multiple wheel cylinders; a circuit pressure sensor for sensing a liquid pressure provided by the liquid-pressure supply device; a cylinder pressure sensor for sensing a liquid pressure in the master chamber; an inspection channel for connecting the master chamber and the liquid-pressure supply device; and an inspection valve provided in the inspection channel so as to control the flow of the pressurizing medium.

## Description

### Technical Field

The present invention relates to an electronic brake system and, more particularly, to an electric brake system for generating a braking force using an electrical signal corresponding to a displacement of a brake pedal.

### Background Art

Vehicles are essentially equipped with brake systems for carrying out braking, and various types of brake systems have been proposed for the safety of drivers and passengers.

Conventional brake systems have mainly used a way of supplying the wheel cylinder with the hydraulic pressure required for braking by means of a mechanically connected booster when a driver works a brake pedal. However, as the market demand for implementing various braking functions in close correspondence with the operating environment of a vehicle has increased, in recent years, an electronic brake system has been widely used in which a driver's braking intention is transmitted as an electrical signal from a pedal displacement sensor that senses the displacement of a brake pedal when the driver works the brake pedal, and based on this, a hydraulic pressure supply device is operated to supply the hydraulic pressure required for braking to a wheel cylinder.

Such an electronic brake system generates and provides an electrical signal to a driver's brake pedal actuation in normal operating mode or to a vehicle's autonomous braking stage, on the basis of this, the hydraulic pressure supply is electrically actuated and controlled to generate and transmit the required hydraulic pressure to the wheel cylinder. In this way, the electronic brake system and the operating method are electrically operated and controlled, so that various braking actions may be realized in a complex manner, but in the event of a technical problem with the electrical component, the hydraulic pressure required for braking is not reliably built up, which may pose a threat to passenger safety.

The electronic brake system thus enters an abnormal operating mode when a component is defective or corresponds to an uncontrollable state, wherein a mechanism is required in which a driver's brake pedal actuation must be directly linked to a wheel cylinder. Thus, in an abnormal operating mode of the electronic brake system, it is necessary for a driver to exert a braking force on a brake pedal, so that the hydraulic pressure required for braking is immediately built up and may be transferred directly into a wheel cylinder. Furthermore, there is a need for an accurate and quick test of the failure of the electronic brake system in order to quickly enter an abnormal operating mode in case of an emergency and to ensure the safety of a passenger.

### Detailed Description of the Invention

### Technical Problem

The present embodiment is to provide an electronic brake system capable of effectively implementing braking even in various operating situations.

The present embodiment is to provide an electronic brake system capable of quickly determining a failure with a simple structure and operation.

The present embodiment is to provide an electronic brake system with improved braking performance and operational reliability.

The present embodiment is to provide an electronic brake system that reduces a load on component elements and thereby improves the durability of the product.

### Technical Solution

According to an aspect of the present invention, there may be provided an electronic brake system including: a reservoir in which a pressurizing medium is stored; an integrated master cylinder having a master piston connected to a brake pedal, a master chamber whose volume is varied by displacement of a master piston, and a sealing member for sealing the master chamber; a hydraulic pressure supply device that generates hydraulic pressure by operating a hydraulic piston by an electric signal output in response to a displacement of the brake pedal; a hydraulic control unit provided between the hydraulic pressure supply device and a plurality of wheel cylinders and configured to control a flow of a pressurizing medium supplied to the plurality of wheel cylinders; a circuit pressure sensor for sensing a hydraulic pressure provided by the hydraulic pressure supply device; a cylinder pressure sensor for sensing a hydraulic pressure in the master chamber; a test flow path connecting the master chamber and the hydraulic pressure supply device; and a test valve provided in the test flow path for controlling a flow of a pressurizing medium.

The integrated master cylinder may include a first master piston connected to the brake pedal, and a first master chamber whose volume is variable by a displacement of the first master piston, the test flow path may have one end connected to the hydraulic pressure supply device side, and the other end branched into a first branch flow path and a second branch flow path to be connected respectively to the first master chamber, the test valve may be provided in the first branch flow path, and the second branch flow path may be provided with a test check valve that allows only a flow of a pressurizing medium from the first master chamber to the hydraulic pressure supply device.

The hydraulic pressure supply device may include a first pressure chamber provided in front of the hydraulic piston and a second pressure chamber provided in rear of the hydraulic piston, and one end of the test flow path is connected to the second pressure chamber.

The electronic brake system may further include a dump control unit provided between the reservoir and the hydraulic pressure supply device and configured to control a flow of a pressurizing medium, wherein the dump control unit includes a first dump control unit for controlling a flow of a pressurizing medium between the first pressure chamber and the reservoir, and a second dump control unit for controlling a flow of a pressurizing medium between the second pressure chamber and the reservoir.

The integrated master cylinder further may include a second master piston that is provided so as to be displaceable by displacement of the first master piston and a second master chamber that is variable in volume by the displacement of the second master piston, and the cylinder pressure sensor may sense a hydraulic pressure of the second master chamber.

The integrated master cylinder may further include: a first sealing member for sealing the first master chamber with respect to the outside; a second sealing member that seals the first master chamber with respect to the second master chamber; and a third seal member that blocks the flow of a pressurizing medium from the first branch flow path into the first master chamber.

The first sealing member may be provided on a rear side of the third sealing member, and the second branch flow path may be connected between the first sealing member and the third sealing member on the integrated master cylinder.

The first master piston may include a first cut-off hole communicating the first master chamber and the second branch flow path in a non-operational state.

The electronic brake system may further include: a first reservoir flow path connecting the reservoir and the first master chamber; and a simulator valve provided in the first reservoir flow path to control a flow of a pressurizing medium between the reservoir and the first master chamber.

The hydraulic control unit may further include: a first backup flow path including a first hydraulic circuit for controlling a flow of a pressurizing medium supplied to a first wheel cylinder and a second wheel cylinder and a second hydraulic circuit for controlling a flow of a pressurizing medium supplied to third and fourth wheel cylinders, and connecting the first master chamber and the first hydraulic circuit; and a second backup flow path connecting the second master chamber and the second hydraulic circuit.

The electronic brake system may further include: a first cut valve provided in the first backup flow path to control a flow of a pressurizing medium; and a second cut valve provided in the second backup flow path to control a flow of the pressurizing medium.

The integrated master cylinder may further include a pedal simulator arranged between the first master piston and the second master piston to provide a pedal sensation via an elastic restoring force occurring during compression.

The electronic brake system may further include a second reservoir flow path connecting the reservoir and the second master chamber, wherein the integrated master cylinder further includes a fourth sealing member for blocking a flow of a pressurizing medium discharged from the second master chamber to the second reservoir flow path.

The second master piston may include a second cut-off hole communicating the second master chamber and the second reservoir flow path in a non-operational state.

The hydraulic control unit may include a first hydraulic circuit for controlling a flow of a pressurizing medium supplied to the first wheel cylinder and the second wheel cylinder, and a second hydraulic circuit for controlling a flow of a pressurizing medium supplied to the third and fourth wheel cylinders, the third wheel cylinder and the fourth wheel cylinder may be each provided with a generator, the hydraulic control unit may include a solenoid valve that blocks transmission of hydraulic pressure of a pressurizing medium to the third wheel cylinder and the fourth wheel cylinder in a regenerative braking mode.

### Advantageous Effects

An electronic brake system according to the present embodiment may stably and effectively implement braking in various operation situations of a vehicle.

An electronic brake system according to the present embodiment may quickly and accurately determine the failure of a device through a simple structure and operation, and may secure passenger safety.

An electronic brake system according to the present embodiment may improve braking performance and operational reliability.

An electronic brake system according to the present embodiment may stably provide a braking pressure even when a component element is defective or a pressurizing medium leaks.

An electronic brake system according to the present embodiment has an effect of reducing a load applied to component elements and improving durability of a product.

### Brief Description of the Drawings

FIG. 1 is a hydraulic circuit diagram showing an electronic brake system according to a first embodiment of the present invention.
FIG. 2 is a hydraulic circuit diagram showing a state in which an electronic brake system according to a first embodiment of the present invention performs a first test mode.
FIG. 3 is a hydraulic circuit diagram showing a state in which an electronic brake system according to a first embodiment of the present invention performs a second test mode.
FIG. 4 is a hydraulic circuit diagram showing a state in which an electronic brake system according to a first embodiment of the present invention performs a first braking mode.
FIG. 5 is a hydraulic circuit diagram showing a state in which an electronic brake system according to a first embodiment of the present invention performs a second braking mode.
FIG. 6 is a hydraulic circuit diagram showing a state in which the electronic brake system according to the first embodiment of the present invention performs a third braking mode.
FIG. 7 is a hydraulic circuit diagram showing a state in which the electronic brake system according to the first embodiment of the present invention performs an abnormal operating mode (fallback mode).
FIG. 8 is a hydraulic circuit diagram showing an electronic brake system according to a second embodiment of the present invention.
FIG. 9 is a hydraulic circuit diagram showing an electronic brake system according to a third embodiment of the present invention.

### Best Mode for Carrying Out the Invention

Hereinafter, embodiments of the present invention will be described in detail with reference to the accompanying drawings. The following embodiments are presented to fully convey the scope of the invention to those skilled in the art. The present invention is not limited to the embodiments presented herein but may be embodied in other forms. The drawings may omit illustration of parts unrelated to the description for clarity of the invention, and may somewhat exaggerate the size of the components for ease of understanding.

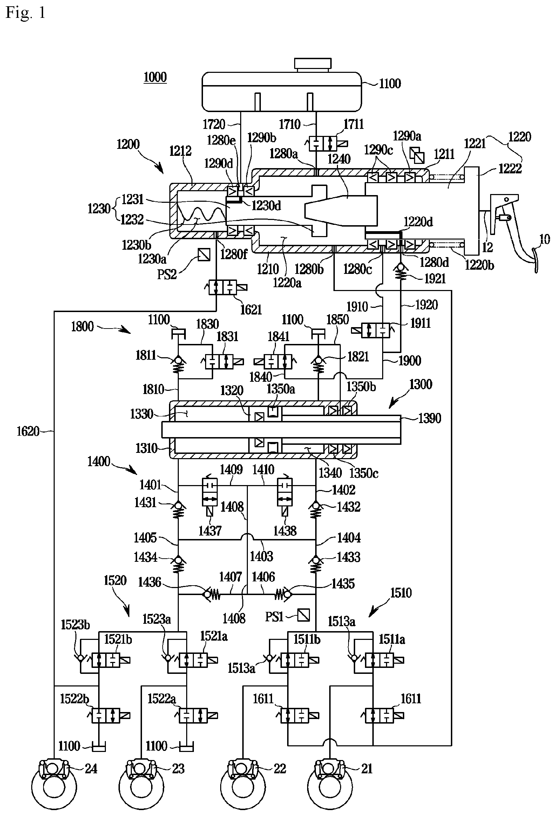

FIG. 1 is a hydraulic circuit diagram showing an electronic brake system 1000 according to a first embodiment of the present invention.

Referring to FIG. 1, an electronic brake system 1000 according to a first embodiment of the present invention includes: a reservoir 1100 in which a pressurizing medium is stored; an integrated master cylinder 1200 that provides a reaction force according to the pedal effort of a brake pedal 10 to a driver and pressurizes and discharges a pressurizing medium such as brake oil received inside; a hydraulic pressure supply device 1300 that receives the driver's braking intention as an electrical signal by a pedal displacement sensor that detects the displacement of the brake pedal 10 and generates hydraulic pressure of the pressurizing medium through a mechanical operation; a hydraulic control unit 1400 for controlling the hydraulic pressure provided from a hydraulic pressure supply device 1300; hydraulic circuits 1510 and 1520 having a wheel cylinder 20 for braking each wheel (RR, RL, FR, and FL) by transferring the hydraulic pressure of the pressurizing medium; a dump control unit 1800 provided between the hydraulic pressure supply device 1300 and the reservoir 1100 to control the flow of the pressurizing medium; backup flow paths 1610, 1620 hydraulically connecting the integrated master cylinder 1200 and the hydraulic circuits 1510, 1520; a reservoir flow path 1700 hydraulically connecting the reservoir 1100 and the integrated master cylinder 1200, and a test flow path 1900 connected to the master chamber of the integrated master cylinder 1200; an electronic control unit (ECU, not shown) that controls the hydraulic pressure supply device 1300 and various valves based on the hydraulic pressure information and the pedal displacement information.

The integrated master cylinder 1200 is provided so that, when the driver applies a tread force to the brake pedal 10 for braking operation, the driver provides a reaction force thereto to provide a stable pedal feel, and at the same time, the brake pedal 10 is actuated to pressurize and discharge the pressurizing medium contained therein.

The highly integrated master cylinder 1200 may be arranged coaxially in one cylinder body 1210 with a simulation unit for supplying the driver with a pedal feel and a master cylinder unit for pressurizing and discharging the pressurizing medium received inside by the pedal depression force.

Specifically, an integrated master cylinder 1200 may include a cylinder body 1210 that has a chamber formed at the inside, a first master chamber 1220a that is formed on the inlet side of the cylinder body 1210 to which a brake pedal 10 is connected, a first master piston 1220 that is provided in the first master chamber 1220a and is displaceably provided by actuation of the brake pedal 10, a second master piston 1230 that is disposed on a second master chamber 1230a on the inner side or on the front side (left side with reference to FIG. 1) of the first master piston 1220, and a pedal simulator 1240 that provides a pedal sensation through an elastic restoring force that occurs during compression and is disposed between the first master piston 1220 and the second master piston 1230.

A first master chamber 1220a and a second master chamber 1230a may be formed sequentially from the brake pedal 10 side (right side with reference to FIG. 1) to the inner side (left side with reference to FIG. 1), on a cylinder body 1210 of an integrated master cylinder 1200.In addition, the first master piston 1220 and the second master piston 1230 are provided in each of the first and second master chambers 1220a, 1230a, and may form a hydraulic pressure or a negative pressure in the pressurizing medium received in each chamber according to the forward and backward movements.

The cylinder body 1210 may include a large-diameter portion 1211 in which the first master chamber 1220a is formed, and the inner diameter thereof is relatively large, and a small-diameter portion 1212 in which the second master chamber 1230a is formed. The large-diameter portion 1211 and the small-diameter portion 1212 of the cylinder body 1210 may be integrally formed.

The actuation first master chamber 1220a may be formed inside a large diameter portion 1311, which is an inlet side or a rear side (right side with reference to FIG. 1) of the cylinder body 1210, and a first master piston 1220 connected to the brake pedal 10 through an input rod 112 may be reciprocally received in the first master chamber 1220a.

In the first master chamber 1220a, a pressurizing medium may be introduced and discharged through the first hydraulic pressure port 1280a, the second hydraulic pressure port 1280b, the third hydraulic pressure port 1280c and the fourth hydraulic pressure port 1280d. The first hydraulic pressure port 1280a may be connected to a first reservoir flow path 1710, which will be described later, so that the pressurizing medium flows from the reservoir 1100 into the first master chamber 1320a, or the pressurizing medium received in the first master chamber 220b may be discharged to the reservoir 1100, and the second hydraulic pressure port 1280b is connected to the first backup flow path 1610, so as to discharge pressurizing medium to the side of the first backup flow path 1610, or to introduce the pressurizing medium to the side of the first master chamber 1220a.

In addition, the first master chamber 1220a is connected to the first and second branch flow paths 1910, 1920 of the test flow path 1900 described later through the third hydraulic pressure port 1280c and the fourth hydraulic pressure port 1280d, respectively, so that the pressurizing medium contained in the first master chamber 1220a may be discharged toward the test flow path 1900 or may flow from the test flow path 1900 into the first master chamber 1220a. Details thereof will be described later.

The first master piston 1220 is received in the first master chamber 1220a, and may be advanced (left direction with reference to FIG. 1) to form a hydraulic pressure by pressurizing a pressurizing medium received in a first master chamber 1220a, or may be moved backward (right direction with reference to FIG. 1) to create a negative pressure in the interior of the first master chamber 1220a. The first master piston 1220 may include a first body 1121 formed in a cylindrical shape so as to be in close contact with an inner circumferential surface of the first master chamber 1220a, and a first flange 1322 formed to extend in a radial direction at a rear end (a right end with reference to FIG. 1), to which the input rod 14 is connected. The first master piston 1220 may be elastically supported by a first piston spring 1120b, which may be provided with one end supported on the front surface (left side with reference to FIG. 1) of the first flange 1022 and the other end supported by the outer surface of the cylinder body 1210.

The first master piston 1220 is provided with a first cut-off hole 1220d that communicates with the first master chamber 1220a and communicates with a fourth hydraulic pressure port 1280d and a second branch flow path 1920 in a non-operational state, that is, a preparation state before displacement occurs. Further, a first sealing member 1290a may be provided between the outer peripheral surface of the first master piston 1220 and the cylinder body 1210 to seal the first master chamber 1220a from the outside. The first sealing member 1290a may be provided so as to be in contact with the outer circumferential surface of the first master piston 1220 by being seated in a receiving groove formed in a recess on the inner circumferential surface thereof, thereby preventing the pressurizing medium contained in the first master chamber 1220a from leaking to the outside and preventing external foreign matters from flowing into the first master chamber 1220a. The first sealing member 1290a may be provided on the outermost side of the inner circumferential surface of the cylinder body 1210, that is, on the rear side (right side with reference to FIG. 1) of the fourth hydraulic pressure port 1280d to which the later-described second branch flow path 1920 is connected.

A third sealing member 1290c may be provided between the outer peripheral surface of the first master piston 1220 and the cylinder body 1210 to block the flow of the pressurizing medium flowing into the first master chamber 1220a from the first branch flow path 1910 connected to the third hydraulic pressure port 1280c. The third sealing members 1290c may be respectively seated in a pair of receiving grooves which are respectively recessed in front and rear of the third hydraulic pressure port 1280c on the inner circumferential surface of the cylinder body 1210 and contact the outer circumferential surface of the first master piston 1220. The pair of third sealing members 1290c may be provided in front of the first sealing member 1290a (left side with reference to FIG. 1), and may allow the flow of the pressurizing medium contained in the first master chamber 1220a to be transmitted to the first branch flow path 1910 through the third hydraulic pressure port 1280c, but may block the flow of the pressurizing medium from the first branch flow path 1910 into the first master chamber 1220a.

The second master chamber 1230a may be formed at the inside of the small diameter portion 1212, which is the inside or the front side (left side with reference to FIG. 1) on the cylinder body 1210, and the second master piston 1230 may be reciprocally received in the second master chamber 1230a.

The pressurizing medium may be introduced into and discharged from the second master chamber 1230a through the fifth hydraulic pressure port 1280e and the sixth hydraulic pressure port 1280f. The fifth hydraulic pressure port 1280e is connected to a second reservoir flow path 1720, which will be described later, so that the pressurizing medium contained in the reservoir 1100 may flow into the second master chamber 1230a. In addition, the sixth hydraulic pressure port 1280d is connected to the second backup flow path 1620 to be described later, so that the pressurizing medium contained in the second master chamber 1230a may be discharged to the side of the second backup flow path 1620, and conversely, the pressurizing medium may flow from the second backup flow path 1520 toward the side of the second master chamber 1230a.

The second master piston 1230 is received in the second master chamber 1230a, and may form the hydraulic pressure of the pressurizing medium received in the second master chamber 1230a by advancing and form the negative pressure in the second master chamber 1230a. The second master piston 1230 may include a second body 1331 formed in a cylindrical shape so as to closely contact the inner circumferential surface of the second master chamber 1230a, and a second flange 1532 formed radially at a rear end portion (right end portion with reference to FIG. 1) of the first body 231 and disposed inside the first master chamber 1220a. The diameter of the second flange 1232 may be larger than the inner circumferential surface diameter of a second master chamber 1230a. The second master piston 1230 may be elastically supported by a second piston spring 1330b, and the second piston springs 1120b may be provided so that one end thereof is supported on a front surface (left side surface with reference to FIG. 1) of the second body 1431 and the other end thereof on an inner surface of the cylindrical body 210.

A second sealing member 1290b may be provided between the outer circumferential surface of the second master piston 1230 and the cylinder body 1210 to seal the first master chamber 1220a with respect to the second master chamber 1230a.The second sealing member 1290b may be provided so as to be seated in a receiving groove recessed on the inner peripheral surface of the cylinder body 1210 and to be in contact with the outer periphery of the second master piston 1230, and may prevent the pressurizing medium contained in the first master chamber 1220a from leaking out to the second master chamber 1230a by the second sealing member 1290b.

The second master piston 1230 is provided with a second cut-off hole 1130d that communicates with the second master chamber 1230a and communicates with a fifth hydraulic pressure port 1280e and a second reservoir flow path 1720 in a non-operational state, that is, a preparation state before displacement occurs. In addition, a fourth sealing member 1290d may be provided between the outer peripheral surface of the second master piston 1230 and the cylinder body 1210 to block the flow of the pressurizing medium discharged from the second master chamber 1230a to the second reservoir flow path 1720 connected to the fifth hydraulic pressure port 1280e. The fourth sealing member 1290d may be seated in a receiving groove recessed in front of the fifth hydraulic pressure port 1280e (left side with reference to FIG. 1) on the inner circumferential surface of the cylinder body 1210, and contact the outer circumferential surface of the second master piston 1230. The fourth sealing member 1290d may be provided in front of (left side with reference to FIG. 1) the second sealing member, and may allow the flow of the pressurizing medium transferred from the second reservoir flow path 1720 connected to the fifth hydraulic pressure port 1280e to the second master chamber 1230a, while blocking the flow thereof transferred from a second master chamber 1230a to the fifth hydraulic pressure port 1280e and the second reservoir flow path 1720.

The reciprocating-integrated master cylinder 1200 has the first master chamber 1220a and the second master chamber 1230a independently of each other, so that safety in the event of failure of component elements may be ensured. For example, the first master chamber 1220a may be connected to one of the two wheel cylinders 21, 22 through a first backup flow path 1610, described below, and the second master chamber 1230a may be connected to the other two wheel cylinders 23, 24 through a second backup flow path 1620, described below, and thus, braking of the vehicle may be possible in the event of a problem such as a leak in any one chamber.

The pedal simulator 1240 may be provided between the first master piston 1220 and the second master piston 1230, and may provide a driver with a pedal feel of the brake pedal 10 by the elastic restoring force thereof. Specifically, the pedal simulator 1240 may be interposed between the front surface of the first master piston 1220 and the rear surface of second master piston 1230, and may be made of an elastic material such as compressible and expandable rubber. The pedal simulator 1240 may include a cylindrical-shaped body that is at least partially inserted and supported on the front surface of the first master piston 1220 and a tapered portion that is inserted or supported at least partially on the rear surface of a second master piston 1230, the tapered portion gradually decreasing in diameter toward the front (left side with reference to FIG. 1). At least part of both ends of the pedal simulator 1240 may be stably supported by being inserted into the first master piston 1220, respectively. Furthermore, it is also possible to provide a stable and familiar pedal feel to a driver by changing the elastic restoring force according to the degree of the tread force of the brake pedal 10 by the tapered portion.

A simulator valve 1711 is provided in the first reservoir flow path 1710 described later so that the flow of the pressurizing medium between the reservoir 1100 and the first master chamber 1220a may be controlled. The simulator valve 1711 may be provided as a normal closed-type solenoid valve which is normally closed and which, upon receiving an electrical signal from the electronic control unit, operates to open the valve and may be open in a normal operating mode of the electronic brake system 1000.

To explain the pedal simulation operation by the integrated master cylinder 1200, in the normal operation mode, the driver operates the brake pedal 10, and the first cut valve 1611 and the second cut valve 1621 provided in each of the first backup flow path 1610 and the second backup flow path 1620, which will be described later, are closed, while the simulator valve 1711 in the first reservoir flow path 1710 is open. As the operation of the brake pedal 10 proceeds, the first master piston 1220 advances, but as the second cut valve 1621 closes, the second master chamber 1230a closes, so that no displacement occurs in the second master piston 1230. At this time, the pressurizing medium contained in the first master chamber 1220a flows along the first reservoir flow path 1710 by the closing operation of the first cut valve 1611 and the opening operation of a simulator valve 1711. While the second master piston 1230 does not move forward, the first master piston 1220 continues to move forward and thus compresses the pedal simulator 1340, and the elastic restoring force of the pedal simulation 1440 may be provided to the driver as a pedal feel. Then, when the driver releases the braking force of the brake pedal 10, the first and second piston springs 1220b, 1330b and the elastic restoring force of a pedal simulator 1440 cause the first, second master piston 1120, 230 and the pedal simulator to return to the original shape and position, and the first master chamber 1220a may be filled with pressurizing medium supplied from the reservoir 1110 through the first reservoir flow path 1610.

Since the interior of the first master chamber 1220a and the second master chamber 1230a is always filled with pressurizing medium, as in the case of a pedal simulation, the friction between the first and second master pistons 1220 and 1230 is minimized, so that the durability of the integrated master cylinder 1200 is improved, as well as the entry of foreign substances from the outside may be blocked.

The homogenizer 1100 may house and store a pressurizing medium therein. The reservoir 1100 may be connected to the integrated master cylinder 1200, the hydraulic pressure supply device 1300 described below, and each component such as a hydraulic circuit described below to supply or receive pressurizing medium. Although several reservoirs 1100 are shown with the same reference numerals in the drawings, as an example to facilitate understanding of the invention, the reservoir 1100 may be provided as a single part or as a plurality of separate and independent parts.

The shock absorber flow path 1700 is provided to connect the integrated master cylinder 1200 and the reservoir 1100.

The reservoir flow path 1700 may include a first reservoir flow path 1710 that connects the first master chamber 1220a and the reservoir 1100, and a second reservoir flow path 1720 that connects the second master chamber 1230a and the reservoir 1100. To this end, one end of the first reservoir flow path 1710 may be in communication with the first master chamber 1220a by the first hydraulic pressure port 1280a of the integrated master cylinder 1200, the other end may be communicating with the reservoir 1100, and one end of the second reservoir flow path 1720 may be communicating with the second master chamber 1230a by the fifth hydraulic pressure port 1280e of the integrated master cylinder 1200, and the other end may be communicating with the reservoir 1100. In addition, as described above, the first reservoir flow path 1710 is provided with the simulator valve 1811 that opens in the normal operation mode, so that the flow of the pressurizing medium between the reservoir 1100 and the first master chamber 1220a through the first reservoirs flow paths 1910 may be controlled.

The hydraulic pressure supply device 1300 is arranged to receive an electrical signal from a pedal displacement sensor which senses the displacement of the brake pedal 10 and to generate the hydraulic pressure of the pressurizing medium through mechanical actuation.

The hydraulic pressure supply device 1300 may include a hydraulic pressure supply unit for supplying a pressure medium pressure to be transmitted to the wheel cylinder 20, a motor (not shown) for generating a rotational force by an electric signal of a pedal displacement sensor, and a power conversion unit (not shown) for converting a rotational movement of the motor into a linear movement and transmitting the linear movement to the hydraulic pressure supply unit.

The hydraulic pressure supply unit includes a cylinder block 1310 in which a pressurizing medium is provided so as to be able to be accommodated, a hydraulic piston 1320 accommodated in the cylinder block, a sealing member 1250 provided between the hydraulic piston 1220 and the cylinder blocks 1130 to seal the pressure chambers 1430, 1440, and a drive shaft 1590 for transmitting the power output from the power conversion unit to the hydraulic pistons 1220.

The pressure chambers 1330, 1240 may include a first pressure chamber 1130 located in front of the hydraulic piston 1320 (leftward of the hydraulic piston 1320 with reference to FIG. 1) and a second pressure chamber 1340 located in rear of the hydraulic piston 1320 (rightward of the hydraulic piston 1320 with reference to FIG 1). That is, the first pressure chamber 1330 is defined by the front surface of the cylinder block 1210 and the hydraulic piston 1420 so as to vary in volume according to the movement of the hydraulic pistons 1520, and the second pressure chambers 1340 are defined by a rear surface of each of the cylinders 1710, 1820.

The first pressure chamber 1330 is connected to a first hydraulic flow path 1401, which will be described later, through a first communication hole 1160a formed in the cylinder block 1210, and the second pressure chamber 1340 is connected through a second communication hole 1260b formed in a cylinder block.

The sealing member includes a piston sealing member 1350a provided between the hydraulic piston 1220 and the cylinder block 1410 to seal between the first pressure chamber 1330 , and the second pressure chamber 1340, and a drive-shaft sealing member 1450b provided between a drive shaft 1690 of the cylinder 1710, to seal an opening of the second and cylinder blocks 1840.The hydraulic pressure or the negative pressure in the first pressure chamber 1330 and the second pressure chamber 1340 caused by the forward or backward movement of the hydraulic piston 1220 is sealed by the piston sealing member 1150a and the drive shaft sealing member 1250b so as not to leak, and may be transmitted to the first hydraulic flow path 1401 and to the second hydraulic flow path 1402 described later. In addition, a chamber sealing member 1350c may be provided between the second pressure chamber 1340 and the drive shaft sealing member 1450b, and the chamber sealing members 155c may allow the flow of the pressurizing medium flowing into the first pressure chamber 1440 through the auxiliary inflow path 1850, which will be described later, but may block the flow of the pressurizing medium leaking out of the second pressure chamber 1340 into the auxiliary outflow path 2550.

A motor (not shown) is provided to generate the driving force of the hydraulic piston 1320 by an electrical signal output from the electronic control unit (ECU). The motor may include a stator and a rotor, thereby supplying power for generating displacement of the hydraulic piston 1320 by rotating in a forward or reverse direction. The rotational angular velocity and the rotational angle of the motor may be precisely controlled by a motor control sensor. Since the motor is a well-known technique, a detailed description thereof will be omitted.

A power conversion part (not shown) is provided to convert the rotational force of the motor into linear motion. As an example, the power converter may be provided with a structure including a worm shaft (not shown), a worm wheel (not shown), and a drive shaft 1390.

The worm shaft may be integrally formed with the rotational shaft of the motor, and a worm may be formed on the outer peripheral surface to engage the worm wheel to rotate the worm wheel. The worm wheel may be coupled to engage the drive shaft 1390 to linearly move the drive shaft 1390, which in turn is coupled to and integrally operates with the hydraulic piston 1320, thereby allowing the hydraulic piston 1320 to slide within the cylinder block 1310.

In other words, when the displacement of the brake pedal 10 is sensed by the pedal displacement sensor, the sensed signal is transmitted to the electronic control unit, which drives the motor to rotate the worm shaft in one direction. The rotational force of the worm shaft is transmitted to the drive shaft 1390 via the worm wheel, so that the hydraulic piston 1220 connected to the driving shaft may generate a hydraulic pressure in the first pressure chamber 1330 while advancing in the cylinder block 1510.

Conversely, when the tread force of the brake pedal 10 is released, the electronic control unit drives the motor to rotate the worm shaft in the opposite direction. Thus, the worm wheel may also rotate in the opposite direction and the hydraulic piston 1320 connected to the drive shaft 1290 may generate a negative pressure in the first pressure chamber 1330 while reversing in the cylinder block 1410.

The generation of the hydraulic pressure and the negative pressure in the second pressure chamber 1340 may be realized by operating in the opposite direction. That is, when the displacement of the brake pedal 10 is sensed by the pedal displacement sensor, the sensed signal is transmitted to the electronic control unit, which drives the motor to rotate the worm shaft in the opposite direction. The rotational force of the worm shaft is transmitted to the drive shaft 1390 via the worm wheel, so that the hydraulic piston 1220 connected to the driving shaft may generate a hydraulic pressure in the second pressure chamber 1340 while moving backward in the cylinder block 110.

On the other hand, when the tread force of the brake pedal 10 is released, the electronic control unit drives the motor in one direction to rotate the worm shaft in one direction. Thus, the worm wheel also rotates in the opposite direction and the hydraulic piston 1320 connected to the drive shaft 1390 may generate a negative pressure in the second pressure chamber 1340 while advancing in the cylinder block 1310.

As described above, the hydraulic pressure supply device 1300 may generate hydraulic pressure or negative pressure in each of the first pressure chamber 1330 and the second pressure chamber 1340 depending on the rotational direction of the worm shaft by driving the motor, and may determine whether to transmit hydraulic pressure to implement braking or to release braking using negative pressure by controlling the valves. Details thereof will be described later.

Meanwhile, the power conversion part according to the present embodiment is not limited to any structure as long as it may convert the rotational motion of the motor into the linear motion of hydraulic piston 1320, and it should be understood that the power conversion part is configured of various structures and systems.

The foaming liquid pressure supply device 1300 may be hydraulically connected to the reservoir 1100 by a dump control unit 1800.The dump control unit 1800 may include a first dump control unit that controls a flow of pressurizing medium between the first pressure chamber 1330 and the reservoir 1100, and a second dump processor that controls the flow of the pressurizing medium among the second pressure chamber 1340 and the reservoir 1100. The first dump control unit may include a first dump flow path 1810 that connects the first pressure chamber 1330 and the reservoir 1100, a first bypass flow path 1830 that branches and then re-merges on the first dump path 2010, and the second dump control unit may include the second dumping flow path 3820 that links the second pressure chamber and the reservoir 1100 and a second bypass flow path 1840 that branch and subsequently re-joins on a second dump flow path.

A first dump check valve 1811 and a first dump valve 1831 that control the flow of the pressurizing medium may be provided in the first dump flow path 1810 and the first bypass flow path 1830, respectively. The first dump check valve 1811 may be provided to allow only the flow of the pressurizing medium from the reservoir 1100 to the first pressure chamber 1330 and block the flow of the pressurizing medium in the opposite direction A first bypass flow path 1830 may be connected in parallel to the first dump check valve 1811 in the first dump flow path 1810 , and a first dump valve 1831 for controlling the flow of the pressurizing medium between the first pressure chamber 1330 and the reservoir 1100 in the first bypass flow path 1830 may be provided. In other words, the first bypass flow path 1830 may bypass and connect the front end and the rear end of the first dump check valve 1911 on the first dumping flow path 910, and the first dumped valve 931 may be provided as a two-way solenoid valve that controls the flow of pressurizing medium between the first pressure chamber 1330 and the reservoir 1100. The first dump valve 1831 may be provided as a normally closed type solenoid valve that is normally in a closed state and operates to open the valve upon receiving an electrical signal from the electronic control unit.

A second dump check valve 1821 and a second dump valve 1841 that control the flow of the pressurizing medium may be provided in the second dump flow path 1820 and the second bypass flow path 1840, respectively. The second dump check valve 1821 may be provided to allow only the flow of the pressurizing medium from the reservoir 1100 to the second pressure chamber 1330 and block the flow of the pressurizing medium in the opposite direction A second bypass flow path 1840 may be connected in parallel to the second dump check valve 1821 in the second dump flow path 1820 , and a second dump valve 1841 for controlling the flow of the pressurizing medium between the second pressure chamber 1330 and the reservoir 1100 are connected to the second bypass flow path 1840.In other words, the second bypass flow path 1840 may bypass and connect the front end and the rear end of the second dump check valve 1921 on the second dumping flow path 920, and the second dumped valve 941 may be provided as a two-way solenoid valve that controls the flow of pressurizing medium between the second pressure chamber 1330 and the reservoir 1100.The second dump valve 1841 may be provided as a normal open-type solenoid valve that is normally open and operates to close the valve upon receiving an electrical signal from the electronic control unit.

In addition, the dump control unit 1800 may include an auxiliary inflow path 1850 that connects the reservoir 1100 and the second pressure chamber 1340 so that the pressure medium may be filled into the second temperature chamber 240. The auxiliary inflow path 1850 may be connected to the rear (right side with reference to FIG. 1) of the chamber sealing member 1350c on the cylinder body 1310. As a result, the pressurizing medium flows from the reservoir 1100 into the second pressure chamber 1340 through the auxiliary inflow path 1850, and the flow of pressurizing medium that leaks from the first pressure chamber 1350 into the additional inflow path 1840 by the chamber sealing member 1250c may be blocked.

The hydraulic control unit 1400 may be provided to control the hydraulic pressure delivered to each wheel cylinder 20, and the electronic control unit ECU is provided for controlling the hydraulic pressure supply device 1300 and the various valves based on the hydraulic pressure information and the pedal displacement information.

The hydraulic control unit 1400 may include, among the four wheel cylinders 20, a first hydraulic circuit 1510 for controlling the flow of hydraulic pressure delivered to the first and second wheel cylinders 21, 22, and a second hydraulic circuit 1520 for controlling a flow of the hydraulic pressure transferred to the third and fourth wheel cylinder 23, 34, and includes a plurality of flow paths and valves for controlling hydraulic pressure delivered from the hydraulic pressure supply device 1300 to the wheel cylinders 20.

The first hydraulic flow path 1401 may be provided in communication with the first pressure chamber 1330, and the second hydraulic fluid line 1502 may be arranged in communication therewith. After merging into the third hydraulic flow path 1403, the first and second hydraulic flow paths 1201 and 1302 may be provided so as to be branched again into a fourth hydraulic flow path 2404 connected to the first hydraulic circuit 1510 and a fifth hydraulic flow paths 2505 connected to a second hydraulic circuit 1520.

The sixth hydraulic flow path 1406 is provided to communicate with the first hydraulic circuit 1510, and the seventh hydraulic flow paths 1407 are provided to communication with the second hydraulic circuit 1520.After merging into the eighth hydraulic flow path 1408, the sixth and seventh hydraulic flow paths 1406 and 1407 may be provided so as to be branched again into the ninth hydraulic flow path 1409 communicating with the first pressure chamber 1330, and the tenth hydraulic flow path 1410 communicating with the second pressure chamber 1340.

A first valve 1431 for controlling the flow of the pressurizing medium may be provided in the first hydraulic flow path 1501. The first valve 1431 may be provided as a check valve to allow flow of pressurizing medium from the first pressure chamber 1330, but to shut off flow of the pressurizing medium in the opposite direction. The second hydraulic flow path 1402 may also be provided with a second valve 1332 for controlling the flow of pressurizing medium, which may be provided as a non-return valve for allowing flow of the pressurizing medium out of the second pressure chamber 1340, but for blocking flow of pressurizing medium in the opposite direction.

The fourth hydraulic flow path 1404 is provided so as to be branched again from the third hydraulic flow paths 1303 in which the first hydraulic flow path 3101 and the second hydraulic flow paths 3202 join to each other and connected to a first hydraulic circuit 1510. A third valve 1433 for controlling the flow of the pressurizing medium may be provided in the fourth hydraulic flow path 1204. The third valve 1433 may be provided as a check valve that allows only the flow of pressurizing medium from the third hydraulic flow path 1303 to the first hydraulic circuit 1510 and blocks the flow of pressurizing medium in the opposite direction.

The fifth hydraulic flow path 1405 is provided so as to be branched again from the third hydraulic flow paths 1303 in which the first hydraulic flow path 3101 and the second hydraulic flow paths 3202 join to each other and connected to a second hydraulic circuit 1520. A fourth valve 1434 for controlling the flow of the pressurizing medium may be provided in the fifth hydraulic flow path 1505. The fourth valve 1434 may be provided as a check valve that allows only the flow of pressurizing medium from the third hydraulic flow path 1303 to the second hydraulic circuit 1520, and blocks the reverse pressurizing medium flow.

The sixth hydraulic flow path 1406 is in communication with the first hydraulic circuit 1510, and the seventh hydraulic flow paths 1407 are provided so as to communicate with the second hydraulic circuit 1520 and to join with the eighth hydraulic flow path 1408. A fifth valve 1435 for controlling the flow of the pressurizing medium may be provided in the sixth hydraulic flow path 1406. The fifth valve 1435 may be provided as a check valve that allows only the flow of pressurizing medium discharged from the first hydraulic circuit 1510, and blocks the reverse pressurizing medium flow. Further, the seventh hydraulic flow path 1407 may be provided with a sixth valve 1436 for controlling the flow of the pressurizing medium. The sixth valve 1436 may be provided as a check valve that allows only the flow of pressurizing medium discharged from the second hydraulic circuit 1520, and blocks the reverse pressurizing medium flow.

The ninth hydraulic flow path 1409 is provided so as to be branched from the eighth hydraulic flow paths 1308 in which the sixth hydraulic flow path 1406 and the seventh hydraulic flow paths 1407 merge with each other and connected to the first pressure chamber 1330. A seventh valve 1437 for controlling the flow of the pressurizing medium may be provided in the ninth hydraulic flow path 1409. The seventh valve 1437 may be provided as a bi-directional control valve that controls the flow of the pressurizing medium delivered along the ninth hydraulic flow path 1409. The seventh valve 1437 may be provided as a normally closed type solenoid valve that is normally in a closed state and that operates to open the valve upon receiving an electrical signal from the electronic control unit.

The tenth hydraulic flow path 1410 is provided so as to be branched off from the eighth hydraulic flow path 1408 where the sixth and seventh hydraulic flow paths 1406, 1407 merge and connected to the second pressure chamber 1340. An eighth valve 1438 for controlling the flow of the pressurizing medium may be provided in the tenth hydraulic flow path 1410. The eighth valve 1438 may be provided as a bi-directional control valve that controls the flow of pressurizing medium delivered along the tenth hydraulic flow path 1410. The eighth valve 1438 may be provided as a normal closed-type solenoid valve that is normally in a closed state and operates to open the valve upon receiving an electrical signal from the electronic control unit, similarly to the seventh valve 2437.

The hydraulic control unit 1400 may transmit the hydraulic pressure formed in the first pressure chamber 1330 to the first hydraulic circuit 1510 through the first, third, and fourth hydraulic lines 1601, 1703, and 1804 in sequence, and may transmit to the second hydraulic circuit 1520 through the second, fifth, and first hydraulic lines 1905 in sequence. In addition, the hydraulic pressure formed in the second pressure chamber 1340 in response to the backward movement of the hydraulic piston 1320 may be transmitted to the first hydraulic circuit 1510 through the second hydraulic flow path 1402 and the fourth hydraulic flow paths 1204 in sequence, and may be transferred to the second fluid circuit 1520 through the first, third, and fifth hydraulic oils 1102.

Conversely, as the hydraulic piston 1320 moves backward, the negative pressure formed in the first pressure chamber 1330 may recover the pressurizing medium provided to the first hydraulic circuit 1510 to the first pressure chamber 1330 sequentially via the sixth hydraulic flow path 1406, the eighth hydraulic flow path 1408, and the ninth hydraulic flow path 1409, and the pressurizing medium provided to the second hydraulic circuit 1520 to the first pressure chamber 1330 sequentially via the seventh hydraulic flow path 1407, the eight hydraulic flow path 1408, and the ninth hydraulic flow path 1409. In addition, as the hydraulic piston 1320 advances, the negative pressure formed in the second pressure chamber 1340 may recover the pressurizing medium provided to the first hydraulic circuit 1510 into the first pressure chamber 1330 in sequence through the sixth hydraulic flow path 1406, the eighth hydraulic flow paths 1408, and the tenth hydraulic flow path 1410, and recover the pressurizing medium provided by the second hydraulic circuit 1520 into the second pressure chamber 1340.

The first hydraulic circuit 1510 of the hydraulic control unit 1400 may control the hydraulic pressures of the first and second wheel cylinders 21, 22, which are two of the four wheels RR, RL, FR, FL, and the second hydraulic circuit 1520 is capable of controlling the hydraulic pressure of the third and fourth wheel cylinders 23, 24, which is the other two wheel cylinders.

The first hydraulic circuit 1510 is provided with the hydraulic pressure through the fourth hydraulic flow path 1404, and may discharge the hydraulic fluid through the sixth hydraulic flow path 1406. To this end, as shown in FIG. 1, the fourth hydraulic flow path 1404 and the sixth hydraulic flow path 1406 may be provided so as to be branched into two flow paths that are connected to the first wheel cylinder 21 and the second wheel cylinder 22 after merging. In addition, the second hydraulic circuit 1520 is provided with the hydraulic pressure through the fifth hydraulic flow path 1405, and is capable of discharging the hydraulic fluid through the seventh hydraulic flow paths 1407, and thus, as shown in FIG. 1, may be provided to be branched into two flow paths connected to the third wheel cylinder 23 and the fourth wheel cylinders 24 after the fifth and seventh hydraulic flow paths 1405, 1407 merge. However, the connection to the hydraulic fluid shown in FIG. 1 is not limited to this structure as an example to facilitate understanding of the present invention, and the same should be understood when the fourth hydraulic flow path 1404 and the sixth hydraulic flow path 1406 are connected to the first hydraulic circuit 1510 side, the first wheel cylinder 21 and the second wheel cylinder 22 are independently branched and connected, and similarly, the fifth and seventh hydraulic fluids 1405 and 1407 are connected, respectively, to the second hydraulic circuit 1520 and the third and fourth wheel cylinders 23 and 24 are independently branched and connected.

The first and second hydraulic circuits 1510, 1520 may each include first to fourth inlet valves 1411a, 2511b, 3521a and 312b to control the flow and hydraulic pressure of the pressurizing medium delivered to the first to the fourth wheel cylinders 24.The first to fourth inlet valves 1511a, 1511b, 1521a, 1521b may each be provided as a normal open-type solenoid valve which is arranged on the upstream side of the first to the fourth wheel cylinders 20 and which is normally open and which operates to close the valve upon receiving an electrical signal from the electronic control unit.

The first and second hydraulic circuits 1510, 1520 may include first to fourth check valves 1413a, 2513b, 3523a and 3023b that are provided in parallel with respect to the first to the fourth inlet valves 1511a, 1511b, 1521a, 1521b. The non-return valves 1513a, 1613b, 2523a and 2623b may be provided in a bypass flow path connecting the front and rear sides of the first to fourth inlet valves 1511a, 1511b, 1521a, 1521b on the first and second hydraulic circuits 1510 and 1520, allowing only the flow of the pressurizing medium from each wheel cylinders 20 to the hydraulic pressure supply device 1300, and blocking the flow thereof from the hydraulic pressure supply device 1300 to the wheel cylinders 20. The hydraulic pressure of the pressurizing medium applied to each of the wheel cylinders 20 may be quickly extracted by the first to fourth check valves 1513a, 1513b, 1523a, 1523b and, even when the first through fourth inlet valves 1511a, 1511b, 1521a, 1521b do not operate normally, the hydraulic pressure in the pressurizing medium applied to the wheel cylinders 20 may be smoothly returned to the hydraulic pressure supply unit.

The economizer second hydraulic circuit 1520 may have first and second outlet valves 1622a, 1722b, which control the flow of pressurizing medium discharged from the third and fourth wheel cylinders 23, 24 for improved performance upon release of the braking of the third 25 and fourth 26 wheel cylinders. The first and second outlet valves 1522a, 1622b are provided on the discharge sides of the third and fourth wheel cylinders 23, 24, respectively, to control the flow of the pressurizing medium delivered from the third or fourth wheel cylinder 22, 34 to the reservoir 1100. The first and second outlet valves 1522a, 1622b may be provided as normal closed-type solenoid valves that operate to open when the outlet valves are normally closed and receive electrical signals from the electronic control unit. In the ABS braking mode of the vehicle, the first and second outlet valves 1522a, 1522b may selectively release the hydraulic pressure of the pressurizing medium applied to the third wheel cylinder 23 and the fourth wheel cylinder 22, and transmit the same to the reservoir 1100 side.

The first and second wheel cylinders 21, 22 of the first hydraulic circuit 1510 may be branched and connected to a first backup flow path 1610, which will be described later, and at least one first cut valve 1611 may be provided in the first backup flow path 1610 to control the flow of pressurizing medium between the first and the second wheel cylinder 24, 192 and the integrated master cylinder 1200.

The electronic brake system 1000 according to an embodiment of the present invention may include first and second backup flow paths 1610, 1620 to directly supply pressurizing medium discharged from the integrated master cylinder 1200 to the wheel cylinders 20 and implement braking when normal operation is not possible due to a failure of the device or the like. The mode in which the hydraulic pressure of the integrated master cylinder 1200 is transmitted directly to the wheel cylinders 20 is referred to as an abnormal operating mode, that is, a fallback mode.

The first backup flow path 1610 may be provided to connect the first master chamber 1220a and the first hydraulic circuit 1510 of the integrated master cylinder 1200 , and the second backup flow path 1620 may also be provided for connecting the second master chamber 1230a and second hydraulic circuit 1520 of the combined master cylinder 1200.

The first backup flow path 1610 may have one end connected to the first master chamber 1220a and the other end branched and connected on the first hydraulic circuit 1510 to the downstream side of the first and second inlet valves 1511a, 1511b, and the second backup flow path 1620 may be connected on one end to the second master chamber 1230a and the opposite end connected on a second hydraulic circuit 1520 between the third inlet valve 1521a and first outlet valve 1522a. Although the second backup flow path 1620 is shown in FIG. 1 as being connected between the third inlet valve 1521a and the first outlet valve 1522a, it should be understood that the same should be true if the second backup flow path 1620 is branched and connected to at least one of the upstream sides of the first and second outlet valves 1522a and 1522b.

The first backup flow path 1610 may be provided with at least one first cut valve 1611 for controlling the flow of the pressurizing medium in both directions, and the second backup flow paths 1620 are provided with a second cut valve 1621 for controlling flow of a pressurizing medium in both directions. The first cut valve 1611 and the second cut valve 1621 may be provided as a normal open-type solenoid valve which is normally open and which operates to close the valve when the electronic control unit receives a closing signal.

As shown in FIG. 1, a pair of the first cut valves 1611 may be provided on the first and second wheel cylinders 21 and 22, respectively, and may selectively release the hydraulic pressure of the pressurizing medium applied to the first wheel cylinder and the second wheel cylinder 20 in the ABS braking mode of the vehicle and discharge the same to the reservoir 1100 side through the first backup flow path 1610, the first master chamber 1220a, the second branch oil 1920 described later, and the dump control unit 1800. Details thereof will be described later.

When closing the first and second cut valves 1611, 1621, it is possible to prevent the pressurizing medium of the integrated master cylinder 1200 from being directly transferred to the wheel cylinders 20 and also prevent the hydraulic pressure provided by the hydraulic pressure supply device 1300 from leaking to the integrated master cylinder 1200. Furthermore, when the first and second cut valves 1611, 1621 are open, the pressurizing medium pressurized in the integrated master cylinder 1200 may be supplied directly to the side of the first hydraulic circuit 1510,1520 through the first and second backup flow paths 1610, 1620 to implement braking.

The test flow path 1900 is provided to connect the integrated master cylinder 1200 and the hydraulic pressure supply device 1300, and is provided so as to test whether or not the simulator valve 1711 leaks from various component elements attached to the integrated master cylinder 1200.

The test flow path 1900 may have one end connected to the second pressure chamber 1340, and the other end branched to the first branch flow path 1910 and the second branch flow path 2920, and may be connected to each of the first master chambers 1220a through the third hydraulic pressure port 1280c and fourth hydraulic pressure port 1280d. One end of the test flow path 1900 may be directly connected to the second pressure chamber 1340 or, as shown in FIG. 1, may be connected through a second dump flow path, 1820, to the first pressure chamber.

The first branch flow path 1910 may be provided with a test valve 1811 for controlling the flow of the pressurizing medium in both directions between the first master chamber 1220a and the second pressure chamber 840, and the first branch flow path 820 may include a test check valve 1921 for allowing only a flow of pressurizing medium from the first master chamber 1220a to the second pressure chamber 640 and blocking the flow thereof in the opposite direction. The test valve 1911 may be provided as a normal open-type solenoid valve which is normally open and which operates to close the valve upon receiving an electrical signal from the electronic control unit. The test valve 1911 may be controlled in a closed state in a first test mode of the electronic brake system 1000 and in an open state in the second test mode. Details thereof will be described later.

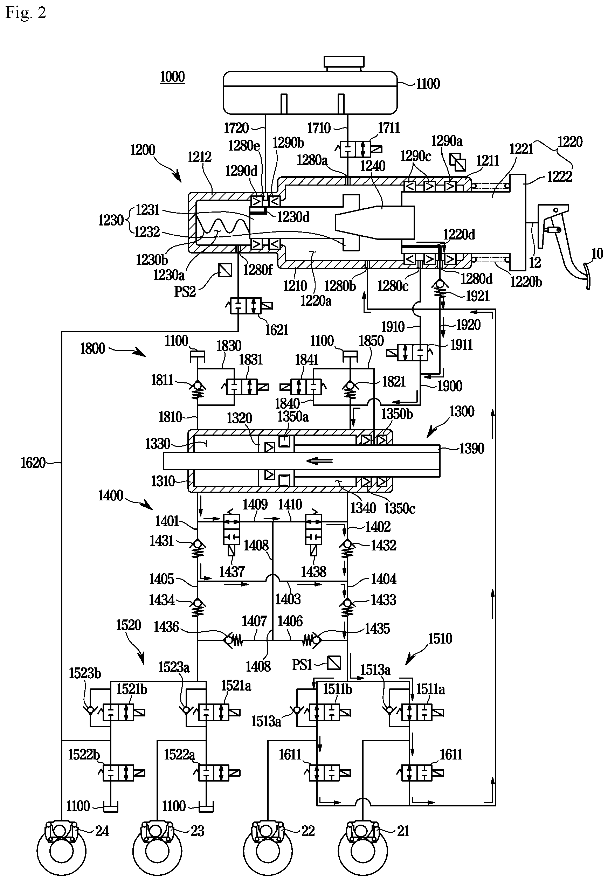

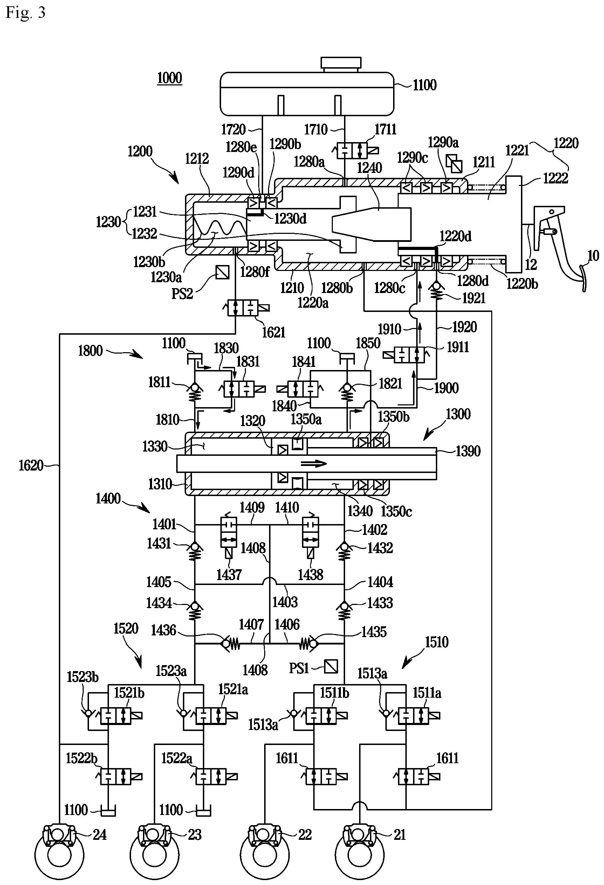

The electronic brake system 1000 may include a circuit pressure sensor PS1 for sensing a hydraulic pressure of a pressurizing medium provided by the hydraulic pressure supply device 1300, and a cylinder pressure sensors PS2 for sensing hydraulic pressure in the second master chamber 1230a. The circuit pressure sensor PS 1 is provided on the side of the first hydraulic circuit 1510, so as to sense the hydraulic pressure of the pressurizing medium generated and provided from the hydraulic pressure supply device 1300 in the test mode and transmitted thereto, and the cylinder pressure sensors PS2 are provided between the second master chamber 1230a and the second cut valve 1621 on the second backup flow path 1620 and sense the hydraulic pressure of a pressurizing medium received in the first master chamber. In the first test mode described later, the pressure value information of the pressurizing medium sensed by the circuit pressure sensor PS1 and the cylinder pressure sensorPS2 may be sent to the electronic control unit, which compares the hydraulic pressure value sensed by a circuit pressure sensors PS1 with the hydraulic water value sensed in the cylinder pressures sensor PS2 to determine whether the integrated master cylinder 1200 or the simulator valve 1711 leaks. The electronic brake system 1000 may also include a stroke sensor (not shown) that measures a displacement amount of the hydraulic piston 1320 of the hydraulic pressure supply device 1300, and the stroke sensor may test a leak in the integrated master cylinder 1200 based on the displacement amount information of the hydraulic piston 1320 in a second test mode described below. Details thereof will be described later with reference to FIGS. 2 and 3.

A method of operating electronic brake system 1000 according to a first embodiment of the present invention will now be described.

An electronic brake system 1000 according to a first embodiment of the present invention may include a test mode for testing whether the integrated master cylinder 1200 and the simulator valve 1711 leak, a normal operation mode for performing braking by operating normally without failure or abnormality of various component elements, and an abnormal operation mode (fallback mode) for performing vehicle braking urgently in a state where failure or failure of the brake system occurs.

First, a test mode of the electronic brake system 1000 according to the first embodiment of the present invention will be described.

Before testing whether the integrated master cylinder 1200 or the simulator valve 1711 leaks, the electronic control unit may discharge the hydraulic pressure of the pressurizing medium applied to the first to fourth wheel cylinders 21, 22, 33, and 24 to the reservoir 1100 to improve the accuracy of the test. The electronic control unit may then enter the first test mode to test for leakage of the integrated master cylinder 1200 and the simulator valve 1711.

FIG. 2 is a hydraulic circuit diagram showing a state in which an electronic brake system 1000 according to a first embodiment of the present invention performs a first test mode.With reference to FIG. 2, the electronic control unit operates the motor to advance the hydraulic piston 1320 and generate a hydraulic pressure in the first pressure chamber 1330.At the same time, the simulator valve 1711, the test valve 1911, the third and fourth inlet valves 1521a, 1521b, and the second cut valve 1621 are closed and the first and second inlet valves 1511a, 1511b are opened. As a result, the hydraulic pressure formed in the first pressure chamber 1330 flows into the first master chamber 1220a through the hydraulic control unit 1400, the first and second inlet valves 1511a, 1511b of the first hydraulic circuit 1510, and the first backup flow path 1610 in sequence. At this time, the second cut valve 1621 is placed in a closed state, and the second master chamber 1230a is closed.

In this state, the electronic control unit may test whether or not the integrated master cylinder 1200 and the simulator valve 1711 leak by comparing the pressure value measured by the circuit pressure sensor PS 1 with that measured by a cylinder pressure sensor P2. Specifically, if there is no leak in the component elements mounted on the integrated master cylinder 1200 and the simulator valve 1711, the hydraulic pressure value of the hydraulic pressure supply device 1300 measured by the circuit pressure sensor PS1 reaches the target pressure, and the hydraulic pressure flows into the first master chamber 1220a via the first backup flow path 1610 and presses the second master piston 1230 forward, so that the hydraulic pressure value sensed by the cylinder pressure sensor PS2 and the hydraulic pressure value of the second master chamber 1230a sensed by the circuit pressure sensors PS1 may be synchronized with each other. The electronic control unit may determine a steady state and end the first test mode when the hydraulic pressure value sensed by the circuit pressure sensor PS 1 is synchronized with that sensed by a cylinder pressure sensors PS2 for a certain period of time.

On the other hand, when the hydraulic pressure value measured by the cylinder pressure sensor PS2 is lower than the hydraulic-pressure value determined by the circuit-pressure sensor PS1, it may be determined that there is a leak in the integrated master cylinder 1200 and the simulator valve 1711.Specifically, when the hydraulic pressure value of the pressurizing medium pressurized by the hydraulic pressure supply device 1300 measured by the circuit pressure sensor PS1 reaches the target pressure and then the corresponding hydraulic pressure is maintained for a certain period of time, but when the liquid pressure value sensed by the cylinder pressure sensors PS2 in the second master chamber 1230a is lower than the hydraulic water value sensed in the circuit-pressure sensors PS1 or also gradually drops, there is a leak in the integrated master cylinder 1200 and the simulator valve 1711, and thus the pressure of the second master chamber 1230a cannot be determined to be abnormal.

As described above, in the electronic brake system 1000 according to the first embodiment of the present invention, it is possible to determine whether or not various component elements provided in the integrated master cylinder 1200, specifically, the first sealing member 1190a, the second sealing member 1290b, the fourth sealing members 1290d, the first test check valve 1911, and the like are normal through the first test mode, and it is also possible to judge whether or not the simulator valve 1711 is normal. Furthermore, it is also possible to determine whether or not peripheral component elements connected to the integrated master cylinder 1200 such as the second cut valve 1621 are normal.

When the electronic control unit determines that there is a leak in the component element of the integrated master cylinder 1200 or the simulator valve 1711 as a result of the first test mode, it may notify the driver of an abnormal condition through a display or a warning sound and guide the driver to restrict the operation of the vehicle.

When the first test mode is determined to be normal as a result of performing the first test mode, the electronic control unit may enter the second test mode.

FIG. 3 is a hydraulic circuit diagram showing a state in which an electronic brake system 1000 according to a first embodiment of the present invention performs a second test mode. Referring to FIG. 3, the electronic control unit operates the motor to reverse the hydraulic piston 1320 and to generate a hydraulic pressure in the second pressure chamber 1340.At the same time, the second dump valve 1841 may be closed to shut off the hydraulic connection between the second pressure chamber 1340 and the reservoir 1100, and the check valve 1911 may be opened to allow hydraulic connection of the test flow path 1900 with the second pressure chamber 1340.As a result, the hydraulic pressure formed in the second pressure chamber 1340 is transmitted to the third hydraulic port 1280c through the test flow path 1900 and the first branch flow path 1910 in sequence. At this time, the first to fourth inlet valves 1511a, 1511b, 1521a, 1521b are switched to the closed state for rapid test mode progress.

The third sealing member 1290c is provided so as to block the flow of the pressurizing medium from the first branch flow path 1910 to the first master chamber 1220a, so that if the third sealing members 1190a are in a steady state, the third hydraulic port 1280c, as a result of which the hydraulic piston 1320 is moved backward by a certain amount of displacement, no longer may form a hydraulic pressure in the second pressure chamber 1340.

Therefore, when the displacement amount of the hydraulic piston measured by the stroke sensor (not shown) falls within a certain range, the electronic control unit may determine that the third sealing member 1290c is in a steady state and terminate the second test mode. Alternatively, when the displacement amount of the hydraulic piston measured by the stroke sensor (not shown) exceeds a certain range or gradually increases, the electronic control unit may determine an abnormal state when there is a leak in the third sealing member 1290c, notify it through a display or a warning sound, and guide it to limit the operation of the vehicle.

Hereinafter, a normal operation mode of the electronic brake system 1000 according to a first embodiment of the present invention will be described.

The normal operation mode of the electronic brake system 1000 according to a first embodiment of the present invention may operate in a different manner from the first braking mode to the third braking mode as the hydraulic pressure transmitted from the hydraulic pressure supply device 1300 to the wheel cylinders 20 increases. Specifically, the first braking mode may provide the hydraulic pressure by the hydraulic pressure supply device 1300 to the wheel cylinders 20 primarily, the second braking mode provides the hydraulic fluid by the hydraulic pressure supply device 1300 secondarily to the wheels cylinder 120 to transmit the brake pressure higher than that in the first brake mode, and the third braking mode thirdly provides the liquid pressure by means of the hydraulic pressure supply device 1300 to be transmitted the brake pressures higher than those in the second brake mode.

The first braking mode to the third braking mode may be changed by changing the operations of the hydraulic pressure supply device 1300 and the hydraulic control unit 1400. By utilizing the first to third braking modes, the hydraulic pressure supply device 1300 may provide a sufficiently high hydraulic pressure of the pressurizing medium without a high-specification motor, and may further prevent unnecessary load applied to the motor. As a result, a stable braking force may be ensured while reducing the cost and weight of the brake system, and durability and operation reliability of the device may be improved.

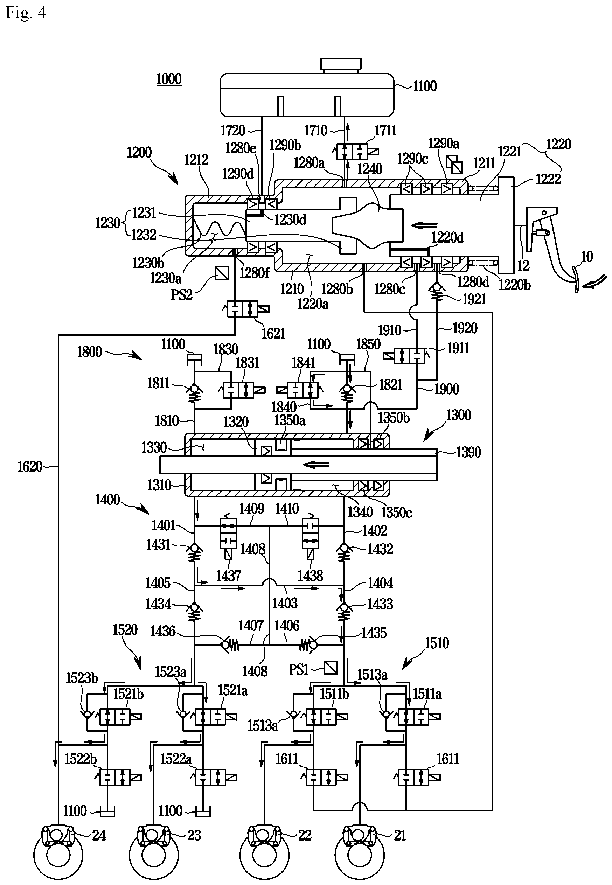

FIG. 4 is a hydraulic circuit diagram showing a state in which an electronic brake system 1000 according to a first embodiment of the present invention performs a first braking mode.

Referring to FIG. 4, when the driver depresses the brake pedal 10 at the start of braking, the motor (not shown) is operated to rotate in one direction, the rotational force of the motor is transmitted to the hydraulic pressure supply unit by the power conversion unit, and the hydraulic piston 1320 of the hydraulic fluid provision unit is advanced to generate a hydraulic pressure in the first pressure chamber 1330.The hydraulic pressure discharged from the first pressure chamber 1330 is transmitted to each of the wheel cylinders 20 via the hydraulic control unit 1400, the first hydraulic circuit 1510, and the second hydraulic circuit 1520 to generate a braking force.

Specifically, the hydraulic pressure formed in the first pressure chamber 1330 sequentially passes through the first hydraulic flow path 1401, the third hydraulic flow paths 1503, and the fourth hydraulic flow path 1604, and is primarily transmitted to the first and second wheel cylinders 21, 22 provided in a first hydraulic circuit 1510. At this time, the first valve 1431 is provided as a check valve that allows only the flow of the pressurizing medium discharged from the first pressure chamber 1330, and the third valve 2433 is provided to allow only the flowing of the pressurizing medium from the third hydraulic flow path 1203 toward the first hydraulic circuit 1510, so that the hydraulic pressure of the pressurization medium may be smoothly transmitted to the first wheel cylinders 21 and 22.In addition, the first inlet valve 1511a and the second inlet valve 1511b provided in the first hydraulic circuit 1510 are maintained in the open state, and the first cut valve 1611 is kept in the closed state, so that the hydraulic pressure of the pressurizing medium may be prevented from leaking to the side of the first backup flow path 1610.

In addition, the hydraulic pressure of the pressurizing medium formed in the first pressure chamber 1330 sequentially passes through the first hydraulic flow path 1401 and the fifth hydraulic flow paths 1505 and is primarily transmitted to the third and fourth wheel cylinders 23 and 24 provided in the second hydraulic circuit 1520. As described above, the first valve 1431 is provided as a check valve that allows only the flow of the pressurizing medium discharged from the first pressure chamber 1330, and the fourth valve 2434 is provided to allow only a flow of pressurizing medium from the third hydraulic flow path 1203 to the second hydraulic circuit 1520, so that the hydraulic pressure of the pressurizing medium may be smoothly transmitted to the third and fourth wheel cylinders 23, 22.In addition, the third inlet valve 1521a and the fourth inlet valve 1521b, which are provided in the second hydraulic circuit 1520, are maintained in the open state, and the first and second outlet valves 1522a and 1522b are maintained at the closed state to prevent the hydraulic pressure of the pressurizing medium from leaking to the reservoir 1100 side.

In the first braking mode, the eighth valve 1438 is controlled to the closed state, so that the hydraulic pressure of the pressurizing medium formed in the first pressure chamber 1330 may be prevented from leaking to the second pressure chamber. Further, the first dump valve 1831 provided in the first bypass flow path 1830 may maintain the closed state and prevent the hydraulic pressure formed in the second pressure chamber 1430 from leaking to the reservoir 1100.

On the other hand, as the hydraulic piston 1320 moves forward, a negative pressure is generated in the second pressure chamber 1340, and the hydraulic pressure of the pressurizing medium is transmitted from the reservoir 1100 to the first pressure chamber 1140 via the second dump flow path 1820, so that a second braking mode described later may be prepared. The second dump check valve 1821 provided in the second dump flow path 1920 allows the flow of the pressurizing medium from the reservoir 1100 to the second pressure chamber 1340, so that the pressurizing medium may be stably supplied to the first pressure chamber 1330, and the first dump valve 1841 provided on the second bypass flow path 1840 may be switched to the open state and may quickly supply the pressurization medium from a reservoir 1100.

In the first braking mode in which braking of the wheel cylinders 20 is performed by the hydraulic pressure supply device 1300, the first cut valve 1611 and the second cut valve 1621 provided in each of the first backup flow path 1610 and second backup flow path 1620 are closed and switched, so that the pressurizing medium discharged from the integrated master cylinder 1200 is prevented from being transmitted to the wheel cylinders 20.

Specifically, at the same time as the driver operates the brake pedal 10, the first cut valve 1611 and the second cut valve 1621 respectively provided in the first backup flow path 1610 and second backup flow path 1620 described later are closed, while the simulator valve 511 of the first reservoir flow path is opened. As the operation of the brake pedal 10 proceeds, the first master piston 1220 advances, but as the second cut valve 1621 closes, the second master chamber 1230a closes, so that no displacement occurs in the second master piston 1230. At this time, the pressurizing medium contained in the first master chamber 1220a flows along the first reservoir flow path 1710 by the closing operation of the first cut valve 1611 and the opening operation of a simulator valve 2711. While the second master piston 1230 does not move forward, the first master piston 1220 continues to move forward and thus compresses the pedal simulator 1340, and the elastic restoring force of the pedal simulation 1440 may be provided to the driver as a pedal feel.

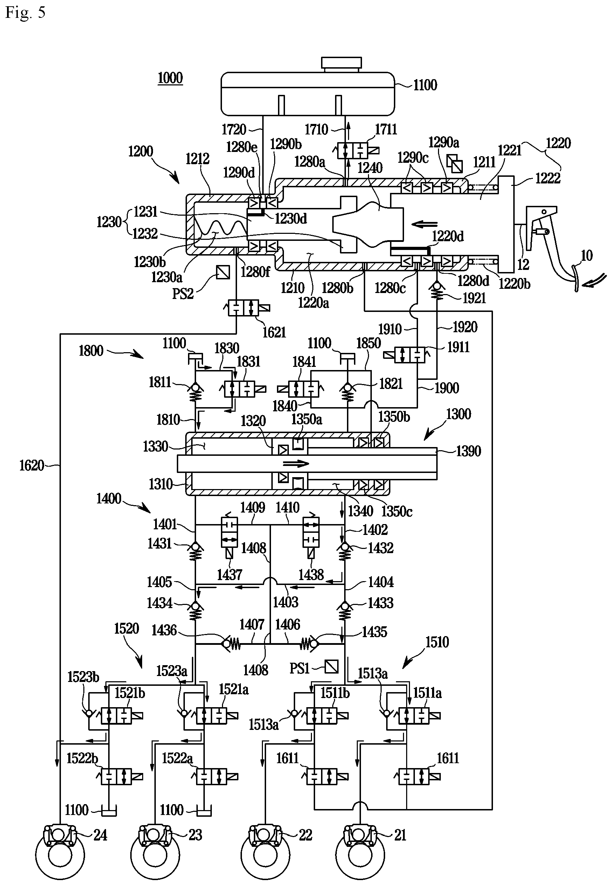

Electronic brake system 1000 according to a first exemplary embodiment of the present invention is able to switch from the first braking mode to the second braking mode shown in FIG. 5 when a higher brake pressure is to be provided than the first brake mode.

FIG. 5 is a hydraulic circuit diagram showing a state in which the electronic brake system 1000 according to the first embodiment of the present invention performs the second braking mode, and with reference to FIG, 5, the electronic control unit may determine that a higher brake pressure is required and switch from the first braking mode to the second brake mode when the displacement or operating speed of the brake pedal 10 detected by the pedal displacement sensor is higher than a predetermined level or the hydraulic pressure detected by a pressure sensor is greater than the predetermined level.

When switching from the first braking mode to the second braking mode, the motor operates to rotate in the other direction, and the rotational force of the motor is transmitted to the hydraulic pressure supply unit by the power conversion unit so that the hydraulic piston 1320 moves backward, thereby generating hydraulic pressure in the second pressure chambers 1240. The hydraulic pressure discharged from the second pressure chamber 1340 is transmitted to each of the wheel cylinders 20 via the hydraulic control unit 1400, the first hydraulic circuit 1510, and the second hydraulic circuit 1520 to generate a braking force.

Specifically, the hydraulic pressure formed in the second pressure chamber 1340 is secondarily transmitted to the first and second wheel cylinders 21, 22 provided in the first hydraulic circuit 1510 by sequentially passing through the second hydraulic flow path 1402 and the fourth hydraulic fluid flow path 2404. At this time, the second valve 1432 provided in the second hydraulic flow path 1302 is provided as a check valve that allows only the flow of the pressurizing medium discharged from the second pressure chamber 1240, and the third valve 2433 provided on the fourth hydraulic flow paths 11404 is provided to allow only the flowing of the pressurizing medium from the third hydraulic fluid flow path 2303 toward the first hydraulic circuit 1510, so that the hydraulic pressure of the pressurization medium may be smoothly transmitted to the first and second wheel cylinders 21, 22.The first inlet valve 1511a and the second inlet valve 1511b provided in the first hydraulic circuit 1510 are maintained in an open state, and the first cut valve 1611 is maintained in a closed state, so that the hydraulic pressure of the pressurizing medium may be prevented from leaking to the side of the first backup flow path 1610.

In addition, the hydraulic pressure formed in the second pressure chamber 1340 sequentially passes through the second hydraulic flow path 1402, the third hydraulic flow paths 1203, and the fifth hydraulic flow path 1105, and is secondarily transmitted to the third and fourth wheel cylinders 23, 24 provided in a second hydraulic circuit 1520.As described above, the second valve 1432 provided in the second hydraulic flow path 1303 is provided as a check valve that allows only the flow of the pressurizing medium discharged from the second pressure chamber 1240, and the fourth valve 2434 provided on the fifth hydraulic flow paths 1505 is provided to allow only a flow of pressurizing medium directed from the third hydraulic fluid flow path 3403 to the second hydraulic pressure circuit 2520, so that the hydraulic pressure of the pressurizing medium may be smoothly transmitted to the third and fourth wheel cylinders 23, 22.In addition, the third inlet valve 1521a and the fourth inlet valve 1521b, which are provided in the second hydraulic circuit 1520, are maintained in the open state, and the first and second outlet valves 1522a and 1522b are maintained at the closed state to prevent the hydraulic pressure of the pressurizing medium from leaking to the reservoir 1100 side.

In the second braking mode, the seventh valve 1437 is controlled to the closed state to prevent the hydraulic pressure of the pressurizing medium formed in the second pressure chamber 1340 from leaking to the first pressure chamber. Further, by switching the second dump valve 1841 to the closed state, the hydraulic pressure of the pressurizing medium formed in the second pressure chamber 1340 may be prevented from leaking to the reservoir 1100 side.

On the other hand, as the hydraulic piston 1320 moves backward, a negative pressure is generated in the first pressure chamber 1330, and the hydraulic pressure of the pressurizing medium is transmitted from the reservoir 1100 to the second pressure chamber 1130 via the first dumping flow path 1810 to prepare a third braking mode described later. The first dump check valve 1811 provided in the first dump flow path 1910 allows the flow of the pressurizing medium from the reservoir 1100 to the first pressure chamber 1330, so that the pressurizing medium may be stably supplied to the second pressure chamber, and the second dump valve 2831 provided on the first bypass flow path 1830 may be switched to the open state to quickly supply the pressurization medium to the third pressure chamber.

The operation of the integrated master cylinder 1200 in the second braking mode is the same as that in the first braking mode of the electronic brake system described above and will not be described in order to avoid duplication of content.

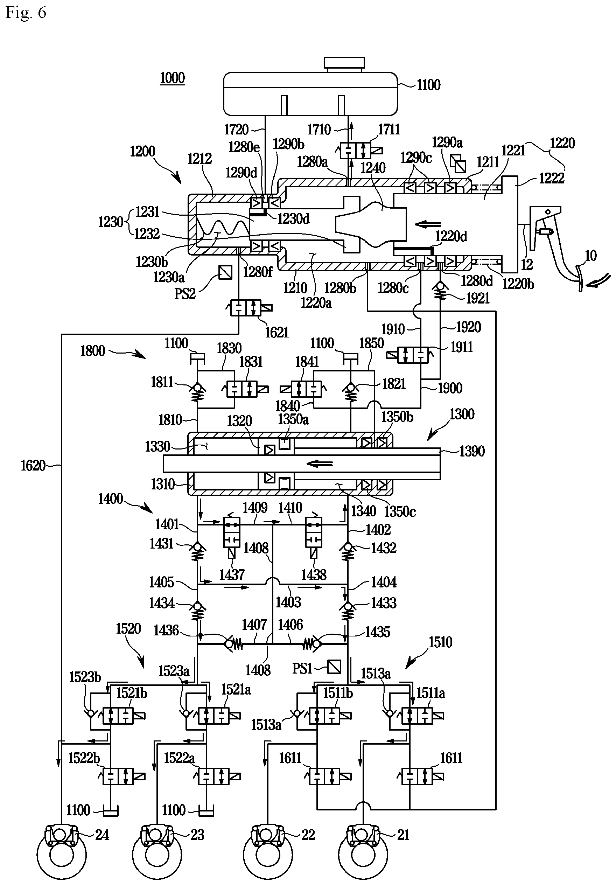

Electronic brake system 1000 according to the first exemplary embodiment of the present invention may switch from the second braking mode to the third braking mode shown in FIG. 6 when a higher brake pressure is to be provided than the second brake mode.

FIG. 6 is a hydraulic circuit diagram showing a state in which an electronic brake system 1000 according to a first embodiment of the present invention performs a third braking mode. Referring to FIG. 6, when the displacement or the operating speed of the brake pedal 10 sensed by the pedal displacement sensor is higher than a preset level or the hydraulic pressure sensed by a pressure sensor is greater than the preset level, the electronic control unit may determine that a higher brake pressure is required and switch from the second braking mode to the third braking mode.

When switching from the second braking mode to the third braking mode, the motor (not shown) is operated to rotate in one direction, the rotational force of the motor is transmitted to the hydraulic pressure supply unit by the power conversion unit, and the hydraulic piston 1320 of the hydraulic fluid provision unit advances again to generate hydraulic pressure in the first pressure chamber 1340. The hydraulic pressure discharged from the first pressure chamber 1330 is transmitted to each of the wheel cylinders 20 via the hydraulic control unit 3400, the first hydraulic circuit 1510, and the second hydraulic circuit 1520 to generate a braking force.

Specifically, a part of the hydraulic pressure formed in the first pressure chamber 1330 sequentially passes through the first hydraulic flow path 1401, the third hydraulic flow paths 1503, and the fourth hydraulic flow path 1604, and is primarily transmitted to the first and second wheel cylinders 21, 22 provided in a first hydraulic circuit 1510 .At this time, the first valve 1431 is provided as a check valve that allows only the flow of the pressurizing medium discharged from the first pressure chamber 1330, and the third valve 2433 is provided to allow only the flowing of the pressurizing medium from the third hydraulic flow path 1203 toward the first hydraulic circuit 1510, so that the hydraulic pressure of the pressurization medium may be smoothly transmitted to the first wheel cylinders 21 and 22.In addition, the first inlet valve 1511a and the second inlet valve 1511b provided in the first hydraulic circuit 1510 are maintained in the open state, and the first cut valve 1611 is kept in the closed state, so that the hydraulic pressure of the pressurizing medium may be prevented from leaking to the first backup flow path 1610.

In addition, a part of the hydraulic pressure of the pressurizing medium formed in the first pressure chamber 1330 sequentially passes through the first hydraulic flow path 1401 and the fifth hydraulic flow paths 1505 and is primarily transmitted to the third and fourth wheel cylinders 23 and 24 provided in the second hydraulic circuit 1520. As described above, the first valve 1431 is provided as a check valve that allows only the flow of the pressurizing medium discharged from the first pressure chamber 1330, and the fourth valve 2434 is provided to allow only a flow of pressurizing medium from the third hydraulic flow path 1203 to the second hydraulic circuit 1520, so that the hydraulic pressure of the pressurizing medium may be smoothly transmitted to the third and fourth wheel cylinders 23, 22.In addition, the third inlet valve 1521a and the fourth inlet valve 1521b, which are provided in the second hydraulic circuit 1520, are maintained in the open state, and the first and second outlet valves 1522a and 1522b are maintained at the closed state to prevent the hydraulic pressure of the pressurizing medium from leaking to the reservoir 1100 side.

On the other hand, in the third braking mode, since the high-pressure hydraulic pressure is provided, as the hydraulic piston 1320 moves forward, the hydraulic pressure in the first pressure chamber 1330 also increases the force to move the hydraulic piston 1320 backward, so that the load applied to the motor rapidly increases. Therefore, in the third braking mode, the seventh valve 1437 and the eighth valve 2438 may be opened to allow the pressurizing medium to flow through the ninth hydraulic flow path 210 and the tenth hydraulic flow paths 2209. In other words, a part of the hydraulic pressure formed in the first pressure chamber 1330 may be supplied to the second pressure chamber 1340 through the ninth hydraulic flow path 1409 and the tenth hydraulic flow paths 1410 in sequence, through which the first and second pressure chambers 1130 and 1240 communicate with each other to synchronize the hydraulic pressures, thereby reducing the load applied to the motor and improving the durability and reliability of the device.

In the third braking mode, the first dump valve 1831 is switched to the closed state to prevent the hydraulic pressure of the pressurizing medium formed in the first pressure chamber 1330 from leaking to the reservoir 1100 along the first bypass flow path 1830, and the second dump valve 1841 is also controlled to the close state, so that a negative pressure may be quickly generated in the second pressure chamber 1340 by the advancement of the hydraulic piston 1320 to be supplied smoothly.

The operation of the integrated master cylinder 1200 in the third braking mode is the same as that in the first and second braking modes of the electronic brake system described above and will not be described in order to avoid duplication of content.

The following describes an operating state in a case where the electronic brake system 1000 according to the first embodiment of the present invention does not operate normally, that is, in a fallback mode.

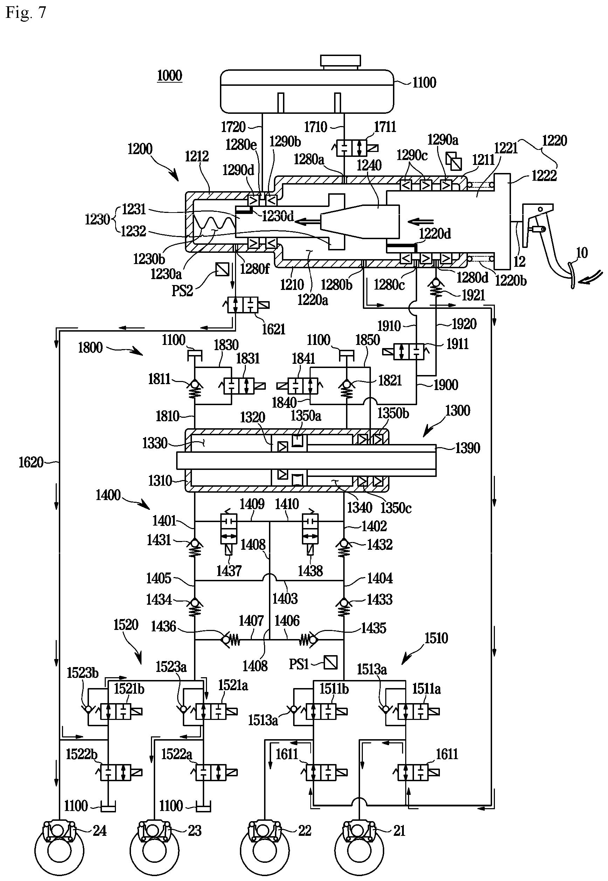

FIG. 7 is a hydraulic circuit diagram showing an operating state in an abnormal operating mode (fallback mode) when the electronic brake system 1000 according to the first embodiment of the present invention is unable to operate normally due to a failure of the device or the like.

Referring to FIG. 7, in the abnormal operating mode, the respective valves are controlled to a non-actuated, braking initial state. At this time, when the driver applies a depression force to the brake pedal 10, the first master piston 1220, which is connected to the latter, advances and a displacement occurs. In the non-operational state, the first cut valve 1611 is in the open state, so that the pressurizing medium contained in the first master chamber 1220a is transferred along the first backup flow path 1610 to the first wheel cylinder 21 and the second wheel cylinders 22 of the first hydraulic circuit 1510 by the advancement of the second master piston 1320, thereby achieving braking.

In addition, as a result of the advancement of the first master piston 1220, the second master piston 1230 is also advanced and displaced, and in the non-actuated state the second cut valve 1621 is also open, so that the pressurizing medium contained in the second master chamber 1230a is transmitted along the second back-up flow path 1420 to the third wheel cylinder 23 and the fourth wheel cylinders 24 of the second hydraulic circuit 1520 in order to achieve braking.

The following describes an electronic brake system 2000 according to a second embodiment of the present invention.

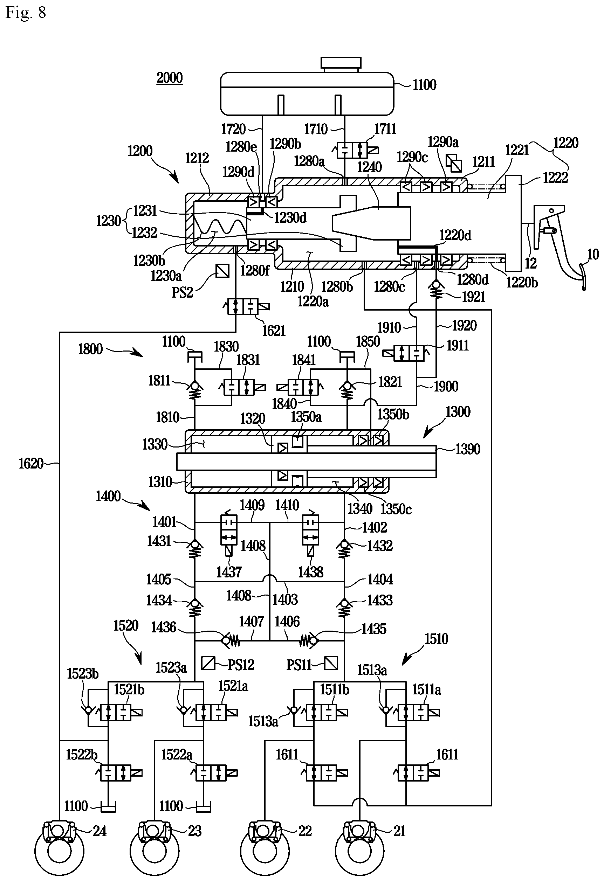

FIG. 8 is a hydraulic circuit diagram showing an electronic brake system 2000 according to a second embodiment of the present invention, and with reference to FIG, 8, the electronic brake systems 2100 of the second embodiment may further include a first circuit pressure sensor PS 11 for sensing a hydraulic pressure of a pressurizing medium delivered to the first hydraulic circuit 1510 and a second circuit pressure sensors PS12 for sensing the hydraulic liquid pressure of the pressurizing medium delivery to the second hydraulic circuit 1520.

The description of the electronic brake system 1000 according to the second embodiment of the present invention described below is the same as that of the first embodiment of this invention described above except that it is further described with additional reference numerals, and the description is omitted to avoid duplication of content.

The first circuit pressure sensor PS11 may sense the hydraulic pressure of the pressurizing medium generated and provided from the hydraulic pressure supply device 1300 and delivered to the first hydraulic circuit 1510, and send pressure value information to the electronic control unit. Further, the second circuit pressure sensor PS12 may sense the hydraulic pressure of the pressurizing medium generated and provided from the hydraulic pressure supply device 1300 and transmitted to the second hydraulic circuit 1520, and send the pressure value information to the electronic control unit. The electronic control unit receives the hydraulic pressure value information of each hydraulic circuit from the first and second circuit pressure sensors PS11 and PS 12, and may control the operation of the hydraulic pressure supply device 1300 based thereon, thereby assisting autonomous driving of the vehicle, such as highway driving assistance and emergency braking.

As an example, the first and second wheel cylinders 21 and 22 provided in the first hydraulic circuit 1510 are assigned to the right front wheel FR and the left front wheel FL, respectively, and the third and fourth wheel cylinder 23 and 34 provided in a second hydraulic circuit 1520 is assigned to a left rear wheel RL and a right rear wheel RR, so that the first circuit pressure sensor PS 11 may sense and transmit the hydraulic pressure applied to the front wheel-side wheel cylinder, and so on. The electronic control unit automatically adjusts and controls the braking pressure of the vehicle based on the hydraulic pressure information of the front wheel- and rear wheel-side wheel cylinders provided from the first circuit pressure sensor PS11 and the second circuit pressure sensor PS21, respectively, so as to assist the driver in driving.

An electronic brake system 3000 according to a third embodiment of the present invention will be described below.

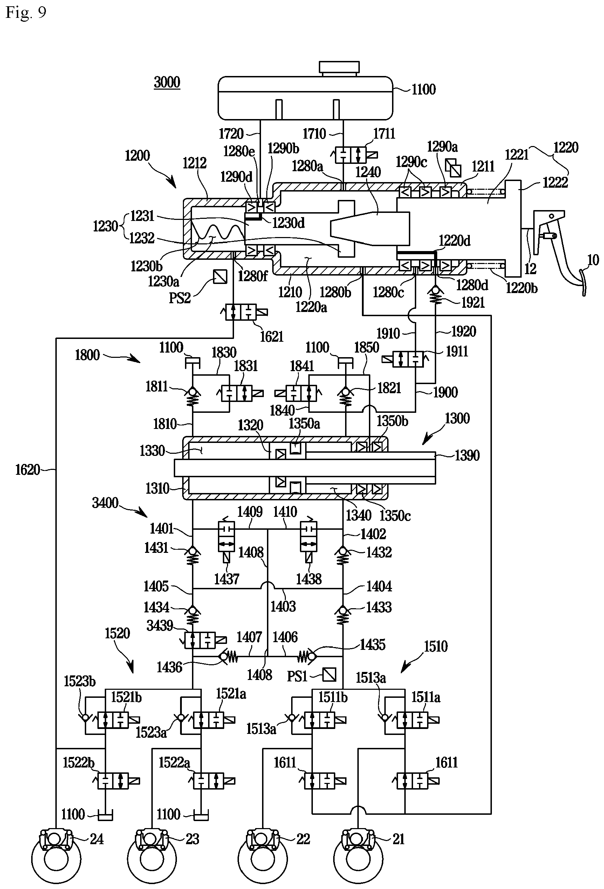

FIG. 9 is a hydraulic circuit diagram showing an electronic brake system 3000 according to a third embodiment of the present invention, and with reference to FIG, 9, the electronic braking system according to the third embodiment may perform cooperative control for a regenerative braking mode.

The description of the electronic brake system 1000 according to the third embodiment of the present invention described below is the same as that of the first embodiment of this invention described above except that it is further described with additional reference numerals, and the description is omitted to avoid duplication of content.

Recently, hybrid vehicles with improved fuel economy have become popular as the market demand for green vehicles has increased. Hybrid vehicles take the way of recovering kinetic energy as electrical energy during braking of the vehicle, storing it in a battery, and then utilizing the motor as an auxiliary drive source of a vehicle; typically, the hybrid vehicle recovers energy by a generator (not shown) or the like during braking operation of the vehicle in order to increase energy recovery. Such a braking operation is referred to as a regenerative braking mode, and the electronic brake system 3000 according to the present embodiment may be provided with a generator (not shown) in which the third wheel cylinder 23 and the fourth wheel cylinders 24 of the second hydraulic circuit 1520 are assigned to the left rear wheel RL and the right rear wheel RR for implementing the regenerative brake mode. The regenerative braking mode may be performed through cooperative control of the generators of the third and fourth wheel cylinders 23, 24 and a ninth valve 3439 described later.

The hydraulic control unit 3400 of the electronic brake system 3000 according to the third embodiment of the present invention may further include a ninth valve 3339 for adjusting the hydraulic pressure of the pressurizing medium delivered to the second hydraulic circuit 1520. The ninth valve 3439 may be disposed at an inlet-side end of the second hydraulic circuit 1520, e.g., at a rear end side of the fourth valve 1434 on the fifth hydraulic fluid path 1305, and may be provided as a bi-directional control valve for controlling the flow of pressurizing medium delivered to the second fluid circuit 3500. The ninth valve 3439 may be provided as a normally closed type solenoid valve that is normally in a closed state and that operates to open the valve upon receiving an electrical signal from the electronic control unit. The fourth valve 2414 is controlled to open in the normal operating mode of the electronic brake system 3000, and may be switched to the closed state when a regenerative braking mode is entered by a generator (not shown) provided in the third wheel cylinder 23 and the fourth wheel cylinders 24.

As for the regenerative braking mode of the electronic brake system 3000 according to the third embodiment of the present invention, in the case of the first wheel cylinder 21 and the second wheel cylinders 22 of the front wheel first hydraulic circuit 1510, the braking force to be implemented by the driver is formed by the hydraulic pressure of the pressurizing medium by the operation of the hydraulic pressure supply device 1300, whereas in the cases of the third wheel cylinder 23 and the fourth wheel cylinder 24 of the rear wheel in which the energy recovery device, such as the generator, is installed, the sum of the braking pressure of pressurizing medium added to the regenerative brake pressure by the hydraulic pressure supply device 1300 must be equal to the total braking force of first and second wheel cylinders.

Thus, upon entering the regenerative braking mode, by closing the ninth valve 3439, the braking pressure by the hydraulic pressure supply device 1300 applied to the third and fourth wheel cylinders 23, 24 is eliminated or kept constant, and at the same time, by increasing the regenerative brake pressure by means of the generator, the total braking force of the third 22 and fourth 25 wheel cylinders may be equal to that of the first 21 and second 26 wheel cylinders.

Specifically, when the driver depresses the brake pedal 10 at the time of braking of the vehicle, the motor operates to rotate in one direction, the rotational force of the motor is transmitted to the hydraulic pressure supply unit by the power transmission unit, and the hydraulic piston 1320 of the hydraulic fluid provision unit advances to generate hydraulic pressure in the first pressure chamber 1330. The hydraulic pressure discharged from the first pressure chamber 1330 is transmitted to each of the wheel cylinders 20 via the hydraulic control unit 1400, the first hydraulic circuit 1510, and the second hydraulic circuit 1520 to generate a braking force.

In the case of the first hydraulic circuit 1510 in which an energy recovery device such as a generator is not provided, the hydraulic pressure of the pressurizing medium formed in the first pressure chamber 1330 sequentially passes through the first, third, and fourth hydraulic paths 1401, 1603, and 1704 to brake the first and second wheel cylinders 21 and 22. As described above, the first valve 1411 and the third valve 313 allow the flow of pressurizing medium from the first pressure chamber 1330 to the first hydraulic circuit 1510. The hydraulic pressure of the pressurizing medium formed in the first pressure chamber 1330 may be transmitted to the first hydraulic circuit 1510 side.

On the other hand, in the case of the second hydraulic circuit 1520 in which the generator is installed, when it is determined that the regenerative braking mode may be entered by sensing the speed, deceleration, and the like of the vehicle, the electronic control unit closes the ninth valve 3439 to block the transmission of the hydraulic pressure of the pressurizing medium to the third wheel cylinder 23 and the fourth wheel cylinders 24, thereby implementing regenerative braking by the generator. Then, when the electronic control unit determines that the vehicle is not suitable for regenerative braking, or the braking pressure of the first hydraulic circuit 1510 is different from that of the second hydraulic circuit 1520, it is possible to switch the ninth valve 3439 to the open state to control the hydraulic pressure of a pressurizing medium to be transmitted to the side of second hydraulic circuit 1520, and synchronize the braking pressures of the first hydraulic circuit 1510 and the second hydraulic circuit 1520. As a result, it is possible to uniformly control the braking pressure or braking force applied to the first to fourth wheel cylinders 20 to prevent oversteering or understeering in addition to the braking stability of the vehicle, thereby improving the running stability of the vehicle.

As described above, although the present invention has been described with reference to the limited embodiments and drawings, it is needless to say that the invention is not limited thereto, and various modifications and variations may be made by those skilled in the art within the spirit of the present invention and the equivalents of the claims described below.

## Claims

1. An electronic brake system comprising:
a reservoir in which a pressurizing medium is stored;
an integrated master cylinder having a master piston connected to a brake pedal, a master chamber whose volume is varied by displacement of a master piston, and a sealing member for sealing the master chamber;
a hydraulic pressure supply device that generates hydraulic pressure by operating a hydraulic piston by an electric signal output in response to a displacement of the brake pedal;
a hydraulic control unit provided between the hydraulic pressure supply device and a plurality of wheel cylinders and configured to control a flow of a pressurizing medium supplied to the plurality of wheel cylinders;
a circuit pressure sensor for sensing a hydraulic pressure provided by the hydraulic pressure supply device;
a cylinder pressure sensor for sensing a hydraulic pressure in the master chamber;
a test flow path connecting the master chamber and the hydraulic pressure supply device; and
a test valve provided in the test flow path for controlling a flow of a pressurizing medium.

2. The electronic brake system according to claim 1, wherein: the integrated master cylinder comprises a first master piston connected to the brake pedal, and a first master chamber whose volume is variable by a displacement of the first master piston; the test flow path has one end connected to the hydraulic pressure supply device side, and the other end branched into a first branch flow path and a second branch flow path to be connected respectively to the first master chamber; the test valve is provided in the first branch flow path; and the second branch flow path is provided with a test check valve that allows only a flow of a pressurizing medium from the first master chamber to the hydraulic pressure supply device.

3. The electronic brake system according to claim 2, wherein the hydraulic pressure supply device comprises a first pressure chamber provided in front of the hydraulic piston and a second pressure chamber provided in rear of the hydraulic piston, and one end of the test flow path is connected to the second pressure chamber.

4. The electronic brake system according to claim 3, further comprising a dump control unit provided between the reservoir and the hydraulic pressure supply device and configured to control a flow of a pressurizing medium, wherein the dump control unit comprises a first dump control unit for controlling a flow of a pressurizing medium between the first pressure chamber and the reservoir, and a second dump control unit for controlling a flow of a pressurizing medium betweenthe second pressure chamber and the reservoir.

5. The electronic brake system according to claim 3, wherein the integrated master cylinder further comprises a second master piston that is provided so as to be displaceable by displacement of the first master piston and a second master chamber that is variable in volume by the displacement of the second master piston, and the cylinder pressure sensor senses a hydraulic pressure of the second master chamber.

6. The electronic brake system according to claim 5, wherein the integrated master cylinder further comprises: a first sealing member for sealing the first master chamber with respect to the outside; a second sealing member that seals the first master chamber with respect to the second master chamber; and a third seal member that blocks the flow of a pressurizing medium from the first branch flow path into the first master chamber.

7. The electronic brake system according to claim 6, wherein the first sealing member is provided on a rear side of the third sealing member, and the second branch flow path is connected between the first sealing member and the third sealing member on the integrated master cylinder.

8. The electronic brake system according to claim 7, wherein the first master piston comprises a first cut-off hole communicating the first master chamber and the second branch flow path in a non-operational state.

9. The electronic brake system according to claim 5, further comprising: a first reservoir flow path connecting the reservoir and the first master chamber; and a simulator valve provided in the first reservoir flow path to control a flow of a pressurizing medium between the reservoir and the first master chamber.

10. The electronic brake system according to claim 9, wherein the hydraulic control unit further comprises: a first backup flow path including a first hydraulic circuit for controlling a flow of a pressurizing medium supplied to a first wheel cylinder and a second wheel cylinder and a second hydraulic circuit for controlling a flow of a pressurizing medium supplied to third and fourth wheel cylinders, and connecting the first master chamber and the first hydraulic circuit; and a second backup flow path connecting the second master chamber and the second hydraulic circuit.

11. The electronic brake system according to claim 10, further comprising: a first cut valve provided in the first backup flow path to control a flow of a pressurizing medium; and a second cut valve provided in the second backup flow path to control a flow of the pressurizing medium.

12. The electronic brake system according to claim 5, wherein the integrated master cylinder further comprises a pedal simulator arranged between the first master piston and the second master piston to provide a pedal sensation via an elastic restoring force occurring during compression.

13. The electronic brake system according to claim 6, further comprising a second reservoir flow path connecting the reservoir and the second master chamber, wherein the integrated master cylinder further comprises a fourth sealing member for blocking a flow of a pressurizing medium discharged from the second master chamber to the second reservoir flow path.

14. The electronic brake system according to claim 13, wherein the second master piston comprises a second cut-off hole communicating the second master chamber and the second reservoir flow path in a non-operational state.

15. The electronic brake system according to claim 9, wherein: the hydraulic control unit comprises a first hydraulic circuit for controlling a flow of a pressurizing medium supplied to the first wheel cylinder and the second wheel cylinder, and a second hydraulic circuit for controlling a flow of a pressurizing medium supplied to the third and fourth wheel cylinders; the third wheel cylinder and the fourth wheel cylinder are each provided with a generator; the hydraulic control unit comprises a solenoid valve that blocks transmission of hydraulic pressure of a pressurizing medium to the third wheel cylinder and the fourth wheel cylinder in a regenerative braking mode.
